# EUROPÄISCHE PATENTANMELDUNG

(11) **EP 0 731 568 A2**
(43) Veröffentlichungstag der Anmeldung: **11.09.1996**
(21) Anmeldenummer: 96102949.3
(22) Anmeldetag: 28.02.1996
(51) Int. Cl.: H04B 1/38

(54) **Kommunikationsendgerät für Bündelfunk**

(30) Priorität: 07.03.1995 DE 19509685
(71) Anmelder: DeTeWe - Deutsche Telephonwerke Aktiengesellschaft & Co., D-10997 Berlin (DE)
(72) Erfinder: Schumann, Hartmut, 12559 Berlin (DE)

(57) **Zusammenfassung**

Für ein schnurloses Kommunikationsendgerät, insbesondere für den Bündelfunk, wird vorgeschlagen, ein innen metallisiertes Kunststoffgehäuse und eine abnehmbare Antenne zu verwenden sowie eine mehrpolige Buchse vorzusehen, über die Zusatzmodule über eine entsprechende Steckerleiste zur Erweiterung der Funktionalität des Endgerätes anschließbar sind.

## Beschreibung

Die Erfindung betrifft schnurlose Kommunikationsendgeräte, insbesondere für den Bündelfunk.

Der Bündelfunk deckt bestimmte geographische Bereiche ab, wie beispielsweise Betriebsgelände oder ein begrenztes Einzugsgebiet von Unternehmen, deren Mitarbeiter untereinander Funkkontakt benötigen. Gegenüber kommerziellen Mobilfunknetzen stellt der Bündelfunk eine preiswerte Alternative dar, da keine nutzungsabhängigen Gebühren innerhalb des Bündelfunknetzes anfallen.

Bündelfunkendgeräte bieten dem Nutzer zusätzliche Leistungsmerkmale, wie z. B. Gruppenruf, Einzelruf, Datenfunk, Sprecheridentifizierung usw. Hierbei wird mit dem Netzbetreiber festgelegt, welche Leistungsmerkmale ein Kunde in Anspruch nehmen kann. Der Fachhandel für die Endgeräte programmiert diese entsprechend.

Der Erfindung lag die Aufgabe zugrunde, schnurlose Kommunikationsendgeräte, wie Bündelfunkendgeräte, auf einfache Weise um weitere Leistungsmerkmale ergänzen zu können.

Diese Aufgabe ist durch die Erfindung gelöst, wie sie im Kennzeichnungsteil des ersten Patentanspruches dargelegt ist. Weitere vorteilhafte Ausgestaltungen sind Gegenstand der Unteransprüche.

Der Vorteil des modularen Aufbaues des Gerätesystems entsprechend der Erfindung besteht in dem einfachen Hinzufügen von Leistungsmerkmalen zu einem Endgerät durch das Ansetzen von Zusatzmodulen.

Es sei ausdrücklich darauf hingewiesen, daß die Erfindung nicht nur für Bündelfunkgeräte anwendbar ist, sondern prinzipiell auf schnurlose Kommunikationsendgeräte übertragbar ist.

Anhand einer aus vier Figuren bestehenden Zeichnung eines Bündelfunkendgerätes sowie von Zusatzmodulen wird die Erfindung nachfolgend näher beschrieben. Es zeigen die
- Fig. 1: ein Bündelfunkgerät in der Ansicht, die
- Fig. 2: einen Zusatzmodul, die
- Fig. 3: die Seitensicht des Bündelfunkgerätes mit einem angesetzten Zusatzmodul und die
- Fig. 4: das Beispiel einer Kaskadierung zweier Zusatzmodule.

In allen Figuren tragen gleiche Ausformungen dieselben Bezugszeichen.

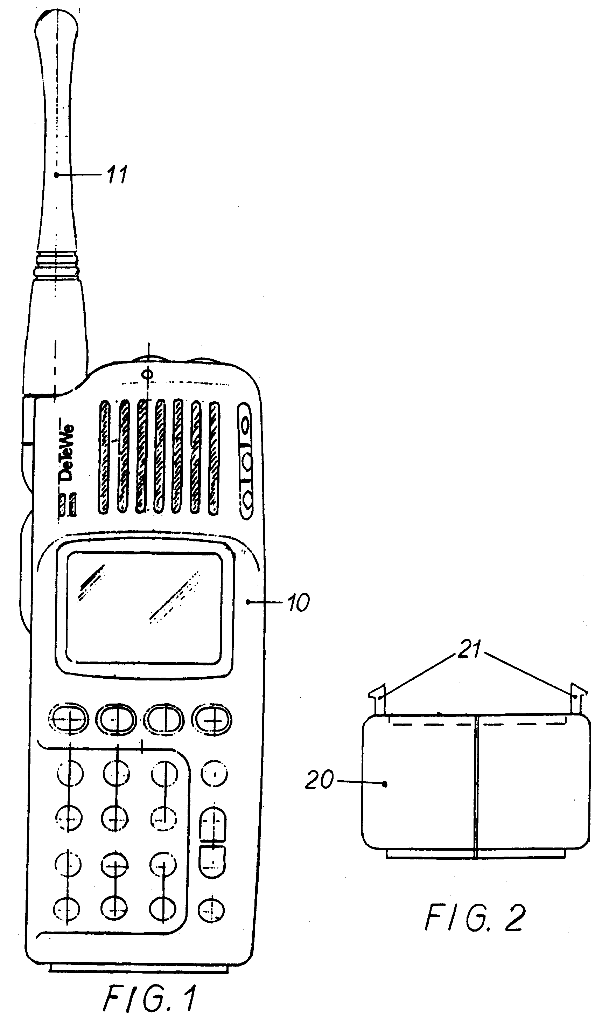

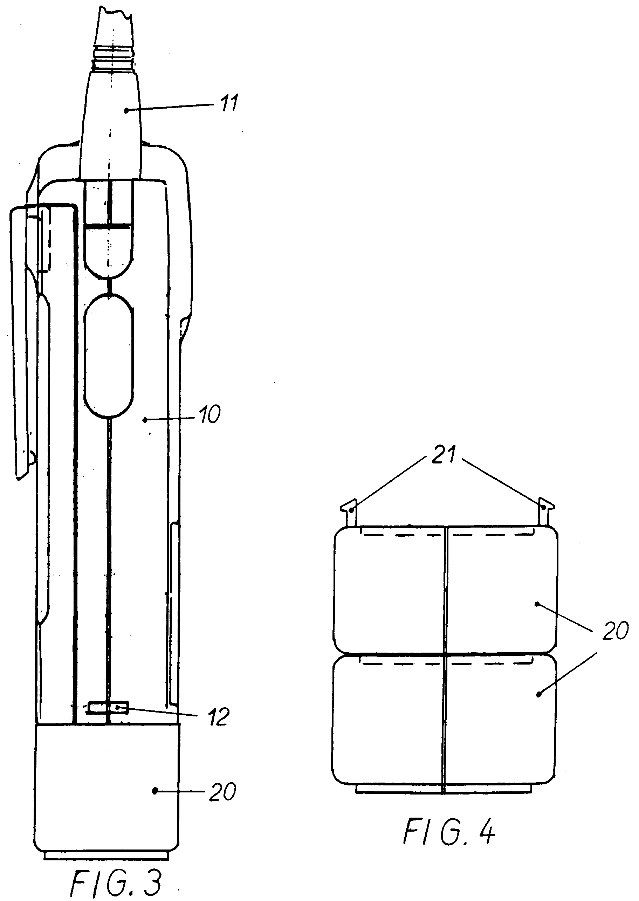

Ein schnurloses Kommunikationsendgerät, beispielsweise ein Bündelfunkendgerät nach Figuren 1 und 3, weist ein innen metallisiertes Kunststoffgehäuse 10 auf, an das eine Antenne 11 mechanisch stabil, jedoch abnehmbar angeordnet ist. An der Unterseite des Kunststoffgehäuses 10 ist zudem eine Antennenbuchse für den Anschluß einer Antenne über eine Fahrzeughalterung vorgesehen. Eine Wähltastatur auf der Vorderseite sowie eine programmierbare Ruftaste und eine Sprechtaste an einer Seite des Kunststoffgehäuses 10 gestatten eine einfache Bedienung, auch eine Einhandbedienung. Weiterhin sind Lautstärke- und Kurzwahltasten vorhanden. Das Endgerät weist zudem ein Display auf, das über eine Reihe von Tasten ansteuerbar ist. Ein Gürtelclip ist auf einfache Art an der Rückseite montierbar.

Die Geräteunterseite enthält außer der bereits erwähnten Antennenbuchse eine mehrpolige Buchse. Beide Buchsen sind versenkt angeordnet und liegen hinter einer gemeinsamen, unverlierbaren Abdeckung zum Explosionsschutz. Das Endgerät nach Figuren 1 und 3 enthält die dem Stand der Technik entsprechenden Leistungsmerkmale.

Die mehrpolige Buchse dient dem Anschließen von Zusatzmodulen 20. Die Zusatzmodule 20 sind von gleicher äußerer Gestalt, jedoch verschiedener Funktionalität. Diese Zusatzmodule 20 ermöglichen, bei Bedarf weitere Leistungsmerkmale zur Verfügung zu stellen. So sind beispielsweise Zusatzmodule 20 für die Ladung des Akkumulators, für eine Datenübertragung, für ein Freisprechen, für eine Anrufbeantwortung, für externe Speicher, für einen Faksimileanschluß, für Fernsteuer- und Überwachungseinrichtungen, für eine Positionsbestimmung nach dem Global Position System, für eine Mailbox usw. anschließbar. Die Zusatzmodule 20 tragen eine entsprechende versenkte Steckerleiste auf ihrer Oberseite und eine versenkte mehrpolige Buchse an der Unterseite. Letztere ist ebenfalls durch eine unverlierbare Abdeckung geschützt. Im gezeigten Beispiel der Figuren 2 und 3 geschieht die Befestigung eines Zusatzmodules 20 am Endgerät durch zwei Rasthaken 21, die in entsprechende Ausnehmungen 12 des Kunststoffgehäuses 10 rasten und die auf einfache Weise lösbar sind. Andere lösbare Befestigungsarten, wie Verschraubungen oder Einrenkungen, sind ebenfalls möglich.

Durch die an der Unterseite der Zusatzmodule 20 vorhandene mehrpolige Buchse ist eine Kaskadierung mehrerer Zusatzmodule 20, wie in Figur 4 gezeigt, ermöglicht.

Die Zusatzmodule 20 sind direkt oder unter Zwischenschalten einer Fahrzeughalterung mit Adapter an das Endgerät anschließbar und elektrisch über ein BUS-System mit diesem verbunden.

## Patentansprüche

1. Schnurloses Kommunikationsendgerät, insbesondere für den Bündelfunk, dadurch gekennzeichnet, daß das Endgerät ein innen metallisiertes Kunststoffgehäuse (10) und eine abnehmbare Antenne (11) sowie eine mehrpolige Buchse aufweist, über die Zusatzmodule (20) über eine entsprechende Steckerleiste zur Erweiterung der Funktionalität des Endgerätes anschließbar sind.

2. Schnurloses Kommunikationsendgerät nach Anspruch 1, dadurch gekennzeichnet, daß die Zusatzmodule (20) kaskadierbar und elektrisch über ein BUS-System mit dem Endgerät verbunden sind.

3. Schnurloses Kommunikationsendgerät nach Anspruch 1, dadurch gekennzeichnet, daß die mehrpolige Buchse zusammen mit einer Antennenbuchse an der Unterseite des Endgerätes versenkt hinter einer unverlierbaren Abdeckung angeordnet ist.

4. Schnurloses Kommunikationsendgerät nach Anspruch 1, dadurch gekennzeichnet, daß die Zusatzmodule (20) unter Zwischenschalten einer Fahrzeughalterung für das Endgerät an dieses anschließbar sind.
